# EUROPÄISCHE PATENTSCHRIFT

(11) **EP 2 971 805 B1**
(45) Veröffentlichungstag und Bekanntmachung des Hinweises auf die Patenterteilung: **10.05.2017**
(21) Anmeldenummer: 14709342.1
(22) Anmeldetag: 12.03.2014
(51) Int. Cl.: F16B 5/02, F16D 3/77, F16D 3/79

(54) **SCHRAUBVERBINDUNG FÜR EINE NICHT SCHALTBARE LAMELLENKUPPLUNG SOWIE LAMELLENKUPPLUNG**
SCREW CONNECTION FOR A NON-SHIFTABLE MULTI-PLATE CLUTCH, AND MULTI-PLATE CLUTCH
ASSEMBLAGE BOULONNÉ POUR EMBRAYAGE À DISQUES MULTIPLES NON EMBRAYABLE ET EMBRAYAGE À DISQUES MULTIPLES

(30) Priorität: 12.03.2013 DE 102013004200
(43) Veröffentlichungstag der Anmeldung: 20.01.2016
(73) Patentinhaber: Renk Aktiengesellschaft, 86159 Augsburg (DE)
(72) Erfinder: THESING, Andreas, 48431 Rheine (DE); KÖSTERS, Michael, 48486 Neuenkirchen (DE)
(74) Vertreter: Schlosser, Stefan
(86) Internationale Anmeldenummer: PCT/EP2014/054886
(87) Internationale Veröffentlichungsnummer: WO 2014/140128

(56) Entgegenhaltungen:
- WO-A2-2011/109658
- DE-C1- 3 822 207
- DE-U1- 8 609 743

## Beschreibung

Die Erfindung betrifft eine Schraubverbindung für eine nicht schaltbare Lamellenkupplung nach dem Oberbegriff des Anspruchs 1. Des Weiteren betrifft die Erfindung eine Lamellenkupplung.

Aus der DE 196 25 318 C2 ist eine Schraubverbindung für eine nicht schaltbare Lamellenkupplung bekannt, die einen Spannbolzen, eine mit dem Spannbolzen zusammenwirkende Bolzenmutter sowie eine ebenfalls mit dem Spannbolzen zusammenwirkende Spannbuchse aufweist. Nach diesem Stand der Technik ist zwischen der Spannbuchse und dem Spannbolzen ein konischer Sitz ausgebildet, wobei die Spannbuchse, die mit dem Spannbolzen zusammenwirkt, radial außen eine weitere Spannbuchse trägt. Zwischen dieser weiteren Spannbuchse und einem Spannring ist ein Lamellenpaket fixiert.Aus der WO 2011/109658 ist eine Schraubverbindung bekannt bei der der Spannbolzen eine Abstufung aufweist, diese Abstufung ist jedoch nicht zwischen Spannbolzen und Spannbuchse angeordnet. Hievon ausgehend liegt der Erfindung die Aufgabe zu Grunde, eine neuartige Schraubverbindung für eine nicht schaltbare Lamellenkupplung sowie eine neuartige Lamellenkupplung zu schaffen.

Diese Aufgabe wird durch eine Schraubverbindung gemäß Anspruch 1 gelöst.

Erfindungsgemäß weist ein Sitz zwischen dem Spannbolzen und der Spannbuchse mindestens eine Abstufung auf, derart, dass an einer ersten Seite der jeweiligen Abstufung eine erste zylindrische Sitzfläche mit einem ersten Durchmesser und an einer zweiten Seite der jeweiligen Abstufung eine zweite zylindrische Sitzfläche mit einem zweiten Durchmesser ausgebildet ist.

Die erfindungsgemäße Schraubverbindung kann mit geringem Aufwand montiert werden. Bedingt durch die Abstufung im Sitz zwischen dem Spannbolzen und der Spannbuchse kann die Spannbuchse ohne Hilfsmittel derart auf den Spannbolzen vormontiert werden, dass ein Gewindeabschnitt des Spanbolzens die Spannbuchse durchdringt und die Bolzenmutter der Schraubverbindung auf dem Gewindeabschnitt positioniert werden kann. Zur Montage muss lediglich die Bolzenmutter angezogen werden. Dies ist auch dann möglich, wenn zwischen Spannbolzen und Spannbuchse zur Montagespielreduzierung bzw. Montagespielvermeidung im nicht montierten Zustand ein Übermaß besteht.

Die erste Seite der jeweiligen Abstufung ist einem Spannbolzenkopf des Spannbolzens zugewandt, wobei die zweite Seite der jeweiligen Abstufung der Bolzenmutter zugewandt ist, und wobei der erste Durchmesser der ersten zylindrischen Sitzfläche größer als der zweite Durchmesser der zweiten zylindrischen Sitzfläche ist. Diese Ausgestaltung ist besonders vorteilhaft.

Nach einer vorteilhaften Weiterbildung der Erfindung weist die Spannbuchse, die als Lamellenpaketträger dient, an einem axialen Ende einen radialen Vorsprung auf, an welchem ein Lamellenpaket abstützbar ist. Da auf einen separaten Lamellenpaketträger verzichtet wird, wird der Montageaufwand weiter reduziert.

Die erfindungsgemäße Lamellenkupplung ist in Anspruch 7 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einer nicht schaltbaren Lamellenkupplung im Bereich einer erfindungsgemäßen Schraubverbindung für eine nicht schaltbare Lamellenkupplung; und
- Fig. 2: den Ausschnitt der Fig. 1 in einem teilweise montierten Zustand.

Die hier vorliegende Erfindung betrifft eine Schraubverbindung für eine nicht schaltbare Lamellenkupplung sowie eine Lamellenkupplung mit solchen Schraubverbindungen.

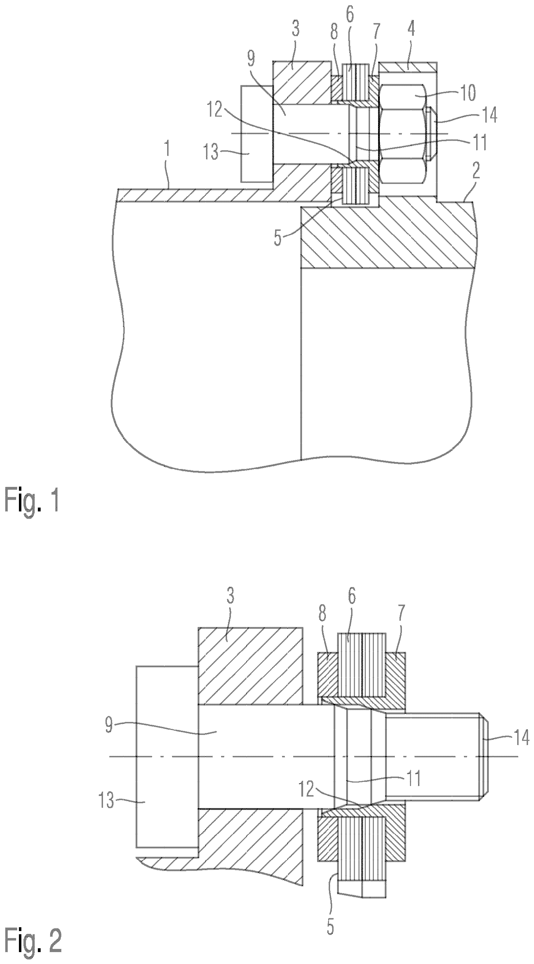

Fig.1 zeigt einen Ausschnitt aus einer nicht schaltbaren Lamellenkupplung im Bereich einer Schraubverbindung, wobei die Lamellenkupplung zwei über die Schraubverbindung miteinander zu verbindende Kupplungsteile 1 und 2 umfasst. An einem ersten Kupplungsteil 1 ist ein erster Flansch 3 und an einem zweiten Kupplungsteil 2 ein zweiter Flansch 4 ausgebildet, wobei zwischen diesen beiden Flanschen 3 und 4 der beiden Kupplungsteile 1 und 2 ein Lamellenpaket 5 der Lamellenkupplung positioniert ist, welches mehrere Lamellen 6 umfasst.

Die erfindungsgemäße Schraubverbindung dient dem axialen, spielfreien Verpressen des Lamellenpakets 5 zwischen den beiden Flanschen 3 und 4 der beiden Kupplungsteile 1 und 2.

Die Schraubverbindung für eine solche nicht schaltbare Lamellenkupplung umfasst einen Spannbolzen 9, eine mit dem Spannbolzen 9 zusammenwirkende Bolzenmutter 10 sowie eine ebenfalls mit dem Spannbolzen 9 zusammenwirkende Spannbuchse 7, wobei an einem axialen Ende des Spannbolzens 9 ein Spannbolzenkopf 13 ausgebildet ist. Am axial gegenüberliegenden Ende weist der Spannbolzen 9 ein Schraubengewinde 14 auf, welches mit einem korrespondierenden Gewinde der Bolzenmutter 10 zusammenwirkt.

Im Sinne der hier vorliegenden Erfindung weist ein zwischen dem Spannbolzen 9 und der Spannbuchse 7 ausgebildeter Sitz zwischen dem Spannbolzen 9 und der Spannbuchse 7 eine Abstufung auf, die durch eine Abstufung 11 des Spannbolzens und eine korrespondierende Abstufung 12 der Spannbuchse 7 bereitgestellt ist. An einer ersten Seite dieser Abstufungen 11, 12 ist eine erste zylindrische Sitzfläche zwischen dem Spannbolzen 9 und der Spannbuchse 7 mit einem ersten Durchmesser und an einer zweiten Seite der Abstufungen 11, 12 eine zweite zylindrische Sitzfläche zwischen dem Spannbolzen 9 und der Spannbuchse 7 mit einem zweiten Durchmesser ausgebildet.

Die erste zylindrische Sitzfläche ist dabei dem Spannbolzenkopf 13 des Spannbolzens 9 zugewandt, wohingegen die zweite zylindrische Sitzfläche der Bolzenmutter 10 zugewandt ist, und wobei der erste Durchmesser der ersten zylindrischen Sitzfläche größer als der zweite Durchmesser der zweiten zylindrischen Sitzfläche ist.

Die Spannbuchse 7, die im Bereich einer radial inneren Fläche ihre Abstufung 12 trägt bzw. aufweist, dient vorzugsweise als Träger des Lamellenpakets 5, wobei die Spannbuchse 7 an einem axialen Ende einen radialen Vorsprung aufweist, an welchem sich das Lamellenpaket 5 abstützt.

Das Lamellenpaket 5 ist bzw. wird zwischen diesem radialen Vorsprung der Spannbuchse 7 und einer separaten Spannscheibe 8 axial verpresst, wobei sich die Spannscheibe 8 am ersten Flansch 3 des ersten Kupplungsteils 1 abstützt.

Die Bolzenmutter 10 kann unmittelbar an der Spannbuchse 7 zur Anlage kommen oder sich alternativ am zweiten Flansch 7 des zweiten Kupplungsteils 2 abstützen, wobei dann der radiale Vorsprung der Spannbuchse 7 am zweiten Flansch 4 des zweiten Kupplungsteils 2 zur Anlage kommt.

Fig. 2 zeigt einen Ausschnitt aus der Anordnung der Fig. 1 in teilweise montiertem Zustand. Zur Montage wird der Spannbolzen 9 durch eine Bohrung im ersten Flansch 3 des ersten Kupplungsteils 1 gesteckt, und zwar so weit, bis der Spannbolzenkopf 13 den ersten Flansch 3 des ersten Kupplungsteils 1 berührt. Anschließend wird das Lamellenpaket 5 zusammen mit der Spannbuchse 7 und der Spannscheibe 8 auf den Spannbolzen 9 aufgeschoben, wobei infolge der Abstufungen 11, 12 an Spannbolzen 9 sowie an Spannbuchse 7 die Spannbuchse 7 ohne Hilfsmittel soweit auf den Spannbolzen 9 axial aufgesteckt werden kann, dass ein das Schraubengewinde 14 tragender Abschnitt des Spannbolzens 9 aus der Spannbuchse 7 herausragt. Die Einheit aus Lamellenpaket 5, Spannbuchse 7 und Spannscheibe 8 kann ohne Hilfsmittel von Hand auf den Spannbolzen 9 aufgesteckt werden, bis derselbe die in Fig. 2 gezeigte Position erreicht hat. Anschließend kann nach Positionieren des zweiten Kupplungsteils 2 und Aufstecken der Bolzenmutter 10 auf den das Schraubengewinde 14 tragenden Abschnitt des Spannbolzens 9 die Lamellenkupplung in Axialrichtung verpresst werden, nämlich durch einfaches Anziehen der Bolzenmutter 10. Wie bereits ausgeführt, dient die Spannbuchse 7, die radial innen die Abstufung 12 trägt, als Träger des Lamellenpakets 5. Auf einen separaten Lamellenpaketträger wird demnach verzichtet.

Im Sinne der hier vorliegenden Erfindung ist demnach im Bereich des Sitzes zwischen dem Spannbolzen 9 und der Spannbuchse 7 eine Abstufung ausgebildet, die durch entsprechende Abstufungen 11, 12 von Spannbolzen 9 und Spannbuchse 7 ausgebildet ist. Diese Abstufungen 11, 12 von Spannbuchse 7 und Spannbolzen 9 verfügen im gezeigten Ausführungsbeispiel über eine Fase.

Durch diese Abstufungen 11, 12 ist zwischen der Spannbuchse 7 und dem Spannbolzen 9 an einer dem Spannbolzenkopf 13 zugewandten Seite der Abstufungen 11, 12 eine erste zylindrische Sitzfläche mit einem ersten, relativ großen Durchmesser ausgebildet, wohingegen an einer zweiten Seite der Abstufungen 11, 12, die der Bolzenmutter 10 zugewandt ist, eine zweite zylindrische Sitzfläche mit einem zweiten, relativ kleinen Durchmesser ausgebildet ist.

Zumindest ist im Bereich der ersten zylindrischen Sitzfläche mit dem ersten Durchmesser am Spannbolzen 9 ein Übermaß gegenüber der Ausnehmung der Spannbuchse 7 ausgebildet. Dies bedeutet, dass der Spannbolzen 9 an einem Abschnitt, der in montiertem Zustand mit einem entsprechenden Abschnitt der Spannbuchse 7 die erste zylindrische Sitzfläche zwischen Spannbolzen 9 und Spannbuchse 7 definiert, im nicht montierten Zustand einen Außendurchmesser aufweist, der größer ist als der Innendurchmesser des entsprechenden Abschnitts der Spannbuchse 7 ist. Bei der Montage erfährt der Spannbolzen 9 eine Querkontraktion und das obige Übermaß kompensiert ein sich in Folge der Querkontraktion einstellendes Montagespiel. Ein solches Übermaß des Spannbolzens 9 gegenüber der Spannbuchse kann auch im Bereich der zweiten zylindrischen Sitzfläche vorgesehen sein.

Bei der Montage wird, wie oben ausgeführt, der Spannbolzen 9 mit dem kleineren Schaftdurchmesser voran in die Spannbuchse 7 eingeführt, ohne dass es aufgrund eines vorgesehenen Übermaßes des Spannbolzens 9 gegenüber der Spannbuchse 7 zu einer Zwangslage zwischen denselben kommt. Hierbei können sich Spannbolzen 9 und Spannbuchse 7 so weit durchdringen, dass das Schraubengewinde 14 des Spannbolzens 9 gegenüber der Spannbuchse 7 vorsteht und demnach die Bolzenmutter 10 mit ausreichender Überdeckung auf den das Schraubengewinde 14 tragenden Abschnitt des Spannbolzens 9 aufgedreht werden kann. Das axiale Verpressen des Lamellenpakets 5 erfolgt dadurch, dass die Bolzenmutter 10 angezogen wird, wobei hierbei das bereits erwähnte radiale Übermaß des Spannbolzens 9 zur Spannbuchse 7 ein Montagespiel kompensiert.

Der Sitz zwischen dem Spannbolzen 9 und der Spannbuchse 7 kann auch mehr als eine Abstufung aufweisen, wobei dann mehr als zwei zylindrische Sitzflächen mit abgestuften Durchmessern ausgebildet sind.

## Patentansprüche

1. Schraubverbindung für eine nicht schaltbare Lamellenkupplung, mit einem Spannbolzen (9), einer mit dem Spannbolzen (9) zusammenwirkenden Bolzenmutter (10) und einer ebenfalls mit dem Spannbolzen (9) zusammenwirkenden Spannbuchse (7), **dadurch gekennzeichnet, dass** ein Sitz zwischen dem Spannbolzen (9) und der Spannbuchse (7) mindestens eine Abstufung aufweist, derart, dass an einer ersten Seite der jeweiligen Abstufung eine erste zylindrische Sitzfläche mit einem ersten Durchmesser und an einer zweiten Seite der jeweiligen Abstufung eine zweite zylindrische Sitzfläche mit einem zweiten Durchmesser ausgebildet ist.

2. Schraubverbindung nach Anspruch 1, **dadurch gekennzeichnet, dass** die erste zylindrische Sitzfläche einem Spannbolzenkopf (13) des Spannbolzens zugewandt ist, dass die zweite zylindrische Sitzfläche der Bolzenmutter (10) zugewandt ist, und dass der erste Durchmesser der ersten zylindrischen Sitzfläche größer als der zweite Durchmesser der zweiten zylindrischen Sitzfläche ist.

3. Schraubverbindung nach Anspruch 1 oder 2, **dadurch gekennzeichnet, dass** die jeweiligen Abstufung des Sitzes, welche die erste zylindrische Sitzfläche und die zweite zylindrische Sitzfläche trennt, durch Abstufungen (11, 12) von Spannbuchse (7) und Spannbolzen (9) ausgebildet ist.

4. Schraubverbindung nach einem der Ansprüche 1 bis 3, **dadurch gekennzeichnet, dass** zumindest im Bereich der ersten zylindrischen Sitzfläche der Spannbolzen (9) ein Übermaß gegenüber der Spannbuchse (7) aufweist.

5. Schraubverbindung nach einem der Ansprüche 1 bis 4, **dadurch gekennzeichnet, dass** die Spannbuchse (7) als Lamellenpaketträger dient.

6. Schraubverbindung nach einem der Ansprüche 1 bis 5, **dadurch gekennzeichnet, dass** die Spannbuchse (7) an einem axialen Ende einen radialen Vorsprung aufweist, an welchem ein Lamellenpaket (5) abstützbar ist.

7. Lamellenkupplung, mit mehreren Schraubverbindungen zur nicht schaltbaren Verbindung von zwei Kupplungsteilen (1, 2), **dadurch gekennzeichnet, dass** jede Schraubverbindung nach einem der Ansprüche 1 bis 6 ausgebildet ist.

8. Lamellenkupplung nach Anspruch 7, **dadurch gekennzeichnet, dass** die Spannbuchse (7) jeder Schraubverbindung zwischen einem ersten Flansch (3) eines ersten Kupplungsteils (1) und einem zweiten Flansch (4) eines zweiten Kupplungsteils (2) positioniert ist, wobei sich der Spannbolzen (9) der jeweiligen Schraubverbindung mit einem Spannbolzenkopf (13) am ersten Flansch (3) des ersten Kupplungsteils (1) und die Bolzenmutter (10) der jeweiligen Schraubverbindung am zweiten Flansch (4) des zweiten Kupplungsteils (2) oder an der Spannbuchse (7) abstützt.

9. Lamellenkupplung nach Anspruch 8, **dadurch gekennzeichnet, dass** ein Lamellenpaket (5) der Lamellenkupplung zwischen den beiden Flanschen (3, 4) der beiden Kupplungsteile (1, 2) verspannt ist, nämlich zwischen einem an einem axialen Ende der Spannbuchse (7) ausgebildeten radialen Vorsprung der Spannbuchse (7) und einer Spannscheibe (8), die an einem gegenüberliegenden axialen Ende der Spannbuchse (7) positioniert ist.

10. Lamellenkupplung nach Anspruch 9, d**adurch gekennzeichnet, dass** die Spannscheibe (8) dem Spannbolzenkopf (13) des Spannbolzens (9) zugewandt ist, und dass der radiale Vorsprung der Spannbuchse (7) der Bolzenmutter (10) zugewandt ist.

## Claims

1. A screw connection for a multiple-disc coupling having a clamping bolt (9), a bolt nut (10) interacting with the clamping bolt (9) and a clamping bush (7) interacting with the clamping bolt (9), **characterized in that** a seat between the clamping bolt (9) and the clamping bush (7) comprises at least one stepping in such a manner that on a first side of the respective stepping a first cylindrical seat surface with a first diameter and on a second side of the respective stepping a second cylindrical seat surface with a second diameter is formed.

2. The screw connection according to Claim 1, characterized- in that the first cylindrical seat surface faces a clamping bolt head (13) of the clamping bolt, in that the second cylindrical seat surface faces the bolt nut (10), and in that the first diameter of the first cylindrical seat surface is greater than the second diameter of the second cylindrical seat surface.

3. The screw connection according to Claim 1 or 2, **characterized in that** the respective stepping of the seat, which separates the first cylindrical seat surface and the second cylindrical seat surface, is formed by stoppings (11, 12) of clamping bush (7) and clamping bolt (9).

4. The screw connection according to any one of the Claims 1 to 3, **characterized in that** at least in the region of the first cylindrical seat surface the clamping bolt (9) has an oversize relative to the clamping bush (7).

5. The screw connection according to any one of the Claims 1 to 4, **characterized in that** the clamping bush (7) serves as multiple-disc assembly carrier.

6. The screw connection according to any one of the Claims 1 to 5, **characterized in that** the clamping bush (7) at an axial end comprises a radial protrusion on which a multiple-disc assembly (5) can be supported.

7. A multiple-disc coupling having a plurality of screw connections for connecting two coupling parts (1, 2), **characterized in that** each screw connection is formed according to any one of the Claims 1 to 6.

8. The multiple-disc coupling according to Claim 7, **characterized in that** the clamping bush (7) of each screw connection is positioned between a first flange (3) of a first coupling part (1) and a second flange (4) of a second coupling part (2), wherein the clamping bolt (9) of the respective screw connection supports itself with a clamping bolt head (13) on the first flange (3) of the first coupling part (1) and the bolt nut (10) of the respective screw connection on the second flange (4) of the second coupling part (2) or on the clamping bush (7).

9. The multiple-disc coupling according to Claim 8, **characterized in that** a multiple-disc assembly (5) of the multiple-disc coupling is clamped between the two flanges (3, 4) of the two coupling parts (1, 2), namely between a radial protrusion of the clamping bush (7) formed on an axial end of the clamping bush (7) and a clamping disc (8), which is positioned on an opposite axial end of the clamping bush (7).

10. The multiple-disc coupling according to Claim 9, **characterized in that** the clamping disc (8) faces the clamping bolt head (13) of the clamping bolt (9) and **in that** the radial protrusion of the clamping bush (7) faces the bolt nut (10).

## Revendications

1. Assemblage boulonné pour un embrayage à disques multiples non embrayable, comportant un boulon de serrage (9), un écrou de boulon (10) coopérant avec le boulon de serrage (9) et une frette de serrage (7) coopérant également avec le boulon de serrage (9), **caractérisé en ce que** une assise entre le boulon de serrage (9) et la frette de serrage (7) présente au moins des gradins, de sorte que sur un premier côté du gradin respectif une première surface d'assise cylindrique avec un premier diamètre et sur un deuxième côté du gradin respectif une deuxième surface d'assise cylindrique avec un deuxième diamètre est réalisée.

2. Assemblage boulonné selon la revendication 1, **caractérisé en ce que** la première surface d'assise cylindrique est tournée vers un tête de boulon de serrage (13) du boulon de serrage, **en ce que** la deuxième surface d'assise cylindrique est tournée vers l'écrou de boulon (10) et **en ce que** le premier diamètre de la première surface d'assise cylindrique est plus grand que le deuxième diamètre de la deuxième surface d'assise cylindrique.

3. Assemblage boulonné selon la revendication 1 ou 2, **caractérisé en ce que** le gradin respectif de l'assise, qui sépare la première surface d'assise cylindrique et la deuxième surface d'assise cylindrique, est réalisé par des gradins (11, 12) de la frette de serrage (7) et du boulon de serrage (9).

4. Assemblage boulonné selon une des revendications 1 à 3, **caractérisé en ce que** au moins dans la zone de la première surface d'assise cylindrique le boulon de serrage (9) présente un surdimensionnement par rapport à la frette de serrage (7).

5. Assemblage boulonné selon une des revendications 1 à 4, **caractérisé en ce que** la frette de serrage (7) sert de support à un paquet de disques multiples.

6. Assemblage boulonné selon une des revendications 1 à 5, **caractérisé en ce que** la frette de serrage (7) présente sur une extrémité axiale une protubérance radiale, sur laquelle un paquet dé disques multiples (5) peut s'appuyer.

7. Embrayage à disques multiples, comportant plusieurs assemblages boulonnés pour la liaison non embrayable de deux parties d'embrayage (1, 2), **caractérisé en ce que** chaque assemblage boulonné est réalisé selon une des revendications 1 à 6.

8. Embrayage à disques multiples selon la revendication 7, **caractérisé en ce que** la frette de serrage (7) de chaque assemblage boulonné est positionnée entre une première bride (3) d'une première partie d'embrayage (1) et une deuxième bride (4) d'une deuxième partie d'embrayage (2), dans lequel le boulon de serrage (9) de l'assemblage boulonné respectif s'appuie par une tête de boulon de serrage (13) sur la première bride (3) de la première partie d'embrayage (1) et l'écrou de boulon (10) de l'assemblage boulonné respectif sur la deuxième bride (4) de la deuxième partie d'embrayage (2) ou sur la frette de serrage (7).

9. Embrayage à disques multiples selon la revendication 8, **caractérisé en ce que** un paquet de disques multiples (5) de l'embrayage à disques multiples est serré entre les deux brides (3, 4) des deux parties d'embrayage (1, 2), à savoir entre une protubérance radiale de la frette de serrage (7) réalisée sur une extrémité axiale de la frette de serrage (7) et une rondelle de serrage (8), qui est positionnée sur une extrémité axiale opposée de la frette de serrage (7).

10. Embrayage à disques multiples selon la revendication 9, **caractérisé en ce que** le disque de serrage (8) est tourné vers la tête de boulon de serrage (13) du boulon de serrage (9) et **en ce que** la protubérance radiale du boulon de serrage (7) est tournée vers l'écrou de boulon (10).
